# EUROPEAN PATENT APPLICATION

(11) **EP 4 851 249 A1**
(43) Date of publication of application: **09.12.2026**
(21) Application number: 25748156.4
(22) Date of filing: 27.01.2025
(51) Int. Cl.: C08L 83/04, C08K 3/01, C09K 5/14

(54) **THERMOSOFTENING THERMALLY CONDUCTIVE COMPOSITION**

(30) Priority: 01.02.2024 JP 2024013961
(71) Applicant: SHIN-ETSU CHEMICAL CO., LTD., Tokyo 100-0005 (JP)
(72) Inventor: HIRONAKA Yuya, Annaka-shi, Gunma 379-0224 (JP); ENDO Akihiro, Annaka-shi, Gunma 379-0224 (JP)
(74) Representative: Angerhausen, Christoph
(86) International application number: PCT/JP2025/002461
(87) International publication number: WO 2025/164574

(57) **Abstract**

Provided is a thermosoftening thermally conductive composition having excellent pump-out resistance, heat resistance, and flame retardancy. The thermosoftening thermally conductive composition includes the components (A), (B), and (C) of: (A) a phenyl-modified silicone resin having an R¹SiO_{3/2} unit (where R¹ represents a group selected from an alkyl group having 1 to 10 carbon atoms or a phenyl group), and an R²₂SiO_{2/2} unit (where R² represents a group selected from an alkyl group having 1 to 10 carbon atoms, an alkenyl group having 2 to 10 carbon atoms, and a phenyl group), the phenyl-modified silicone resin having a phenyl modification ratio of 30 to 60 mol%; (B) a linear aryl-modified organopolysiloxane having one or more aryl groups having 6 to 10 carbon atoms per molecule, the linear aryl-modified organopolysiloxane having an aryl modification ratio of 20 to 60 mol%; and (C) a thermally conductive filler having a thermal conductivity of 10 W/(m·K) or more and an average particle size of 0.3 to 20 µm.

## Description

### Technical Field

The present invention relates to a thermosoftening thermally conductive composition.

### Background Art

In recent years, as thermally conductive materials having both advantages of a thermally conductive sheet and a thermally conductive grease, many thermosoftening materials have been disclosed which are in a non-flowable state at room temperature and soften or melt by heat to exhibit flowability.

However, thermosoftening materials using an organic substance as a base oil (Patent documents 1 to 4) are inferior in heat resistance, and when these are used in automotive applications or the like, deterioration due to high temperatures is a concern.

Many thermosoftening materials based on silicone for improving heat resistance have also been disclosed (e.g., Patent documents 5 and 6), and examples thereof include a sheet molded product and a paste-like thermally conductive material (one utilizing a curing reaction).

However, when a thermally conductive material is rapidly applied over a wide area, the sheet molded product has a problem in that bubbles are introduced between the sheet molded product and a contact surface.

Further, when a thermally conductive material is used for an electronic component, applying the thermally conductive material by screen printing or the like is the fastest and most efficient. However, when a sheet molded product is applied to screen printing, in a drying step after application, a curing reaction proceeds from a surface layer of the sheet, and therefore a solvent may remain inside the sheet.

Accordingly, a paste-like thermosoftening composition that can be suitably used for application by screen printing or the like has been disclosed (Patent document 7). However, since this composition uses a wax obtained by modifying silicone, it has a drawback in that it is inferior in flowability, flame retardancy, and heat resistance to unmodified silicone, and pump-out resistance at high temperatures is insufficient.

### Prior Art Documents

### Patent documents

Patent document 1: JP-A-2021-106283
Patent document 2: WO-A-2016/185936
Patent document 3: WO-A-2015/035575
Patent document 4: JP-A-2021-80316
Patent document 5: JP-A-2016-76678
Patent document 6: JP-A-2021-147591
Patent document 7: JP-A-2017-061613

### Summary of Invention

### Technical Problem

Accordingly, an object of the present invention is to provide a thermosoftening thermally conductive composition that is used as a thermally conductive material interposed at a thermal interface between a heat-generating electronic component and a heat-dissipating component such as a heat sink or a metal housing for cooling the electronic component, that is in a paste form having excellent flowability and can be applied by screen printing or the like, that decreases in viscosity, softens, or melts at a temperature within an operating temperature range of the electronic component so that the thermally conductive material (coating film) adheres to the thermal interface, and that has pump-out resistance superior to that of known products.

### Solution to Problem

The inventors of the present invention conducted intensive studies in order to address the above issues and, as a result, found that a thermosoftening thermally conductive composition having reduced thermal resistance can be obtained by compounding a thermosoftening phenyl-modified silicone resin with a linear aryl-modified organopolysiloxane and a thermally conductive filler. Thus, the present invention has been completed.

A thermosoftening thermally conductive composition containing a specific amount of an isoparaffin that has a boiling point of 80°C to 360°C and that is capable of dissolving or dispersing the components (A) and (B) described below is in a paste form at the time of application, and therefore screen printing can be easily and rapidly performed and operation can be efficiently carried out. In addition, it has been found that, when the solvent contained therein is volatilized, the composition forms a thermally conductive coating film that is in a non-flowable state at room temperature, and therefore pump-out resistance is improved compared with that of general heat dissipation greases, thereby improving reliability. Thus, the present invention has been completed.

That is, it is an object of the present invention to provide a thermosoftening thermally conductive composition containing the components (A) to (C) as defined below, and a paste-like thermosoftening thermally conductive composition obtained by dissolving the above thermosoftening thermally conductive composition in the component (D) described below.

Here, the term "thermosoftening" refers to thermosoftening, decreasing in viscosity, or melting by heat (at 40°C or more). A material that thermally softens, decreases in viscosity, or melts such that the surface of the coating film is fluidized may be referred to as the one having a "thermosoftening" property.
<1> A thermosoftening thermally conductive composition comprising the components (A), (B), and (C) of:
   (A) a phenyl-modified silicone resin in an amount of 100 parts by mass, said resin having
      an R¹SiO_{3/2} unit, wherein R¹ represents a group selected from an alkyl group having 1 to 10 carbon atoms or a phenyl group, and
      an R²₂SiO_{2/2} unit, wherein R² represents a group selected from an alkyl group having 1 to 10 carbon atoms, an alkenyl group having 2 to 10 carbon atoms, and a phenyl group,
      wherein the phenyl-modified silicone resin has a phenyl modification ratio of 30 to 60 mol%;
   (B) a linear aryl-modified organopolysiloxane in an amount of 20 to 40 parts by mass, wherein the linear aryl-modified organopolysiloxane has one or more aryl groups, having 6 to 10 carbon atoms, per molecule and has an aryl modification ratio of 20 to 60 mol%; and
   (C) a thermally conductive filler in an amount of 800 to 1,300 parts by mass, said filler having a thermal conductivity of 10 W/(m·K) or more and an average particle size of 0.3 to 20 µm.
<2> The thermosoftening thermally conductive composition according to <1>, further comprising, as a component (D), 10 to 300 parts by mass of an isoparaffinic solvent having a boiling point of 80°C to 360°C per 100 parts by mass of the component (A).
<3> The thermosoftening thermally conductive composition according to <1> or <2>, further comprising, as a component (E), 5 to 40 parts by mass of a surface treatment agent per 100 parts by mass of the component (A).
<4> A cured product of the thermosoftening thermally conductive composition according to any one of <1> to <3>.

### Advantageous Effects of Invention

The thermosoftening thermally conductive composition according to the present invention is superior in pump-out resistance, heat resistance, and flame retardancy to known products, and is useful as a heat dissipation material. The thermosoftening thermally conductive composition according to the present invention is interposed between a heat-generating electronic component and a heat-dissipating component, has no flowability at room temperature, and decreases in viscosity, softens, or melts due to heat generated during operation of the electronic component, and substantially fills the interface between the electronic component and the heat-dissipating component. Furthermore, the thermosoftening thermally conductive composition according to the present invention can be in a paste form having excellent flowability, and therefore can be easily applied by screen printing or the like.

### Description of Embodiments

The present invention will be described in detail below.

### (A) Phenyl-Modified Silicone Resin

The component (A) is a phenyl-modified silicone resin having a thermosoftening property, and forms a matrix of the composition (heat dissipation member) according to the present invention. The component (A) is a silicone resin such that the composition (heat dissipation member) according to the present invention is substantially in a non-flowable state at room temperature, and upon heat generation of a heat-generating electronic component, specifically in the temperature range of 40°C to 80°C, the composition thermally softens, decreases in viscosity, or melts and becomes flowable. The component (A) also serves as a binder that causes thermal softening of the composition (heat dissipation member) according to the present invention and imparts processability and workability to a filler that imparts thermal conductivity.

The term "room temperature" as used herein refers to a temperature within the range of 10°C to 30°C.

Here, the temperature at which thermal softening, viscosity reduction, or melting occurs refers to a temperature of a heat dissipation member; the melting point of the silicone resin is preferably 40°C to 80°C, particularly preferably 50°C to 70°C. When the melting point of the silicone resin is less than 40°C, tackiness may develop on a surface layer during application of the composition, which deteriorates handling properties. When the melting point of the silicone resin is more than 80°C, the temperature during thermocompression bonding must be increased to a high temperature, which may cause difficulty in a mounting process.

The component (A) has R¹SiO_{3/2} units (hereinafter referred to as "T units") and R²₂SiO_{2/2} units (hereinafter referred to as "D units"). In addition to the T and D units, the component (A) may have a small amount of R²₃SiO_{1/2} units (hereinafter referred to as "M units").

R¹ is a group selected from alkyl groups having 1 to 10 carbon atoms and phenyl groups. Specific examples of R¹ include alkyl groups such as a methyl group, an ethyl group, a propyl group, an isopropyl group, a butyl group, an isobutyl group, a tert-butyl group, a pentyl group, a neopentyl group, a hexyl group, a cyclohexyl group, an octyl group, a nonyl group, and a decyl group; and phenyl groups. Among these, from the viewpoint of flame retardancy, R¹ is preferably a methyl group or a phenyl group.

R² is a group selected not only from the alkyl groups and phenyl groups of R¹, but also from alkenyl groups having 2 to 10 carbon atoms. Specific examples of R² include, in addition to the specific examples of R¹, alkenyl groups such as a vinyl group, an allyl group, a propenyl group, an isopropenyl group, a butenyl group, a hexenyl group, a cyclohexenyl group, and an octenyl group. Among these, from the viewpoint of flame retardancy, R² is preferably a methyl group, a phenyl group, a vinyl group, or an allyl group.

The silicone resin as the component (A) will be described more specifically below. The silicone resin as the component (A) needs to contain T and D units so as to be non-flowable at room temperature. Typical examples of the silicone resin include silicone resins composed of a combination of T units, D units, and a small amount of M units.

Introduction of the T units enhances toughness and improves brittleness in a solid state at room temperature, thereby preventing breakage and the like during handling. Introduction of the D units enhances toughness at room temperature. The M units form end groups. In the silicone resin composed of a combination of the M , T, and D units, the ratio between the T and D units is preferably 10:90 to 90:10, particularly preferably 20:80 to 80:20. The ratio of the M units to the total of the T and D units is preferably 0.2:100 to 4:100.

The phenyl modification ratio of the silicone resin as the component (A) is 30 to 60 mol%, preferably 40 to 60 mol%, particularly preferably 50 to 60 mol%. When the phenyl modification ratio is less than 30 mol%, tackiness of the resin weakens, and pump-out resistance may deteriorate. When the phenyl modification ratio is more than 60 mol%, even when the component (B), which is a compatibilizer, is added, the component (A) may not dissolve and may separate. The phenyl modification ratio is a molar percentage indicating a ratio of units having a phenyl group among the M, D, and T units.

Specific examples of the component (A) include the following silicone resin having difunctional structural units (D units) and trifunctional structural units (T units) in a specific composition. The bonding order of the siloxane units shown below may be either block or random. ${D}_{m} {Tφ}_{p} {{D}^{Vi}}_{n}$ wherein D represents a dimethylsiloxy unit (i.e., (CH₃)₂SiO_{2/2}); Tφ represents a phenylsiloxy unit (i.e., (C₆H₅)SiO_{3/2}); D^{Vi} represents a methylvinylsiloxy unit (i.e., (CH₃)(CH₂=CH)SiO_{2/2}); p/(m+p+n) (molar ratio) = 0.3 to 0.6; and n/(m+n) (molar ratio) = 0.7 to 1.0.

Specific examples of the component (A) also include the following silicone resin having monofunctional structural units (M units), difunctional structural units (D units), and trifunctional structural units (T units) in a specific composition. ${M}_{L} {D}_{m} {Tφ}_{p} {{D}^{Vi}}_{n}$ wherein M represents a trimethylsiloxy unit (i.e., (CH₃)₃SiO_{1/2}); D, Tφ, and D^{Vi} are as defined above; p/(m+p+n+L) (molar ratio) = 0.3 to 0.6; n/(m+n) (molar ratio) = 0.7 to 1.0; and L/(m+n) (molar ratio) = 0.001 to 0.1.

### Method for Measuring Ratio of M, D, and T Units

In the present invention, the ratio of monofunctional R¹₃SiO_{1/2} units (M units), difunctional R²SiO_{2/2} units (D units), and trifunctional R¹SiO_{3/2} units (T units) of an organopolysiloxane resin having a three-dimensional network (resinous) structure is a value determined from ²⁹Si-NMR.

The method for preparing a sample for ²⁹Si-NMR is not particularly limited. For example, a sample can be prepared by dissolving 1 part by mass of the organopolysiloxane resin in 3 parts by mass of deuterated chloroform. The average degree of polymerization of the silicone resin, that is, the total amount of the M, D, and T units and Q units is preferably 30 to 300, more preferably 50 to 150.

In the present invention, the average degree of polymerization is a value determined as a polystyrene-equivalent number-average degree of polymerization (number-average molecular weight) in GPC (gel permeation chromatography) analysis using toluene as a developing solvent.

The component (A) may be used alone, or two or more of them may be used in combination.

The content of the component (A) in the composition according to the present invention is preferably 6.9% to 9.1% by mass, more preferably 7.2% to 8.6% by mass.

### (B) Linear Aryl-Modified Organopolysiloxane

The component (B) is a linear aryl-modified organopolysiloxane.

The thermosoftening thermally conductive composition according to the present invention can be in the form of a paste having excellent flowability, and therefore can be easily applied by screen printing or the like. After the thermosoftening thermally conductive composition according to the present invention has been applied to a heat-generating electronic component and/or a heat-dissipating component by screen printing or the like, when the composition contains the component (D) described below, the isoparaffin as the component (D) is volatilized by air drying or heating, which brings the composition into a non-flowable state at room temperature. Subsequently, viscosity reduction, softening, or melting occurs by heat generated during operation of the electronic component, causing at least a surface of the coating film to fluidize. The component (B) is a component necessary for dissolving the component (A), which serves as a base polymer, in the component (D), and also has an effect of enhancing flowability exhibited when the surface of the coating film is fluidized by heat generation.

The component (B) is a linear organopolysiloxane having one or more aryl groups having 6 to 10 carbon atoms per molecule, from the viewpoint of compatibility with the component (A). The aryl modification ratio is 20 to 60 mol%, preferably 30 to 50 mol%.

When the aryl modification ratio is less than 20 mol% or more than 60 mol%, the function as a compatibilizer deteriorates, and the component (A) may not dissolve and may separate. The aryl modification ratio is a molar percentage indicating a ratio of units having an aryl group or an aralkyl group among all siloxane units.

Specific examples of the component (B) include a compound represented by the following formula (1).

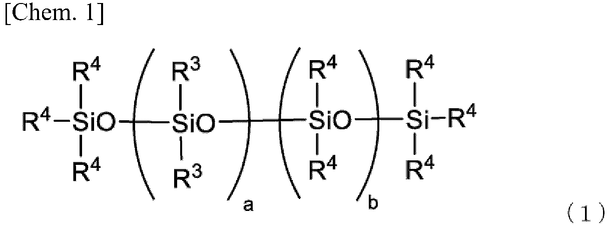

In the formula (1), R³ represents an aryl group having 6 to 10 carbon atoms or an aralkyl group having 7 to 10 carbon atoms. Specific examples thereof include aryl groups such as a phenyl group, a tolyl group, a xylyl group, and a naphthyl group; and aralkyl groups such as a benzyl group. Among these, R³ is preferably a phenyl group.

In the formula (1), R⁴ represents a monovalent hydrocarbon group selected from an alkyl group having 1 to 10 carbon atoms, preferably 1 to 6 carbon atoms, or an alkenyl group having 2 to 10 carbon atoms, preferably 2 to 4 carbon atoms. Examples thereof include alkyl groups such as a methyl group, an ethyl group, a propyl group, an isopropyl group, a butyl group, an isobutyl group, a tert-butyl group, a pentyl group, a neopentyl group, a hexyl group, a heptyl group, and an octyl group; cycloalkyl groups such as a cyclopentyl group, a cyclohexyl group, and a cycloheptyl group; and alkenyl groups such as a vinyl group, an allyl group, a propenyl group, an isopropenyl group, a butenyl group, a hexenyl group, a cyclohexenyl group, and an octenyl group. Among these, R⁴ is preferably a methyl group or a vinyl group. The bonding of the siloxane units enclosed by a and b may be either block or random.

In the formula (1), the ratio of each siloxane unit is preferably in a range that satisfies 0.1 < a < 0.7, 0.3 < b < 0.9, and a + b = 1.

The component (B) may be used alone, or two or more of them may be used in combination.

The kinematic viscosity of the organopolysiloxane as the component (B) at 25°C is preferably 200 to 5,000 mm²/s at 25°C, particularly preferably 300 to 4,000 mm²/s. When the kinematic viscosity is lower than 200 mm²/s, oil bleed is likely to occur. When the kinematic viscosity is higher than 5,000 mm²/s, flowability during viscosity reduction, softening, or melting may deteriorate. The kinematic viscosity of the organopolysiloxane is a value measured at 25°C with an Ostwald viscometer.

Specific examples of the component (B) include organopolysiloxanes having the following structures.

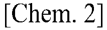

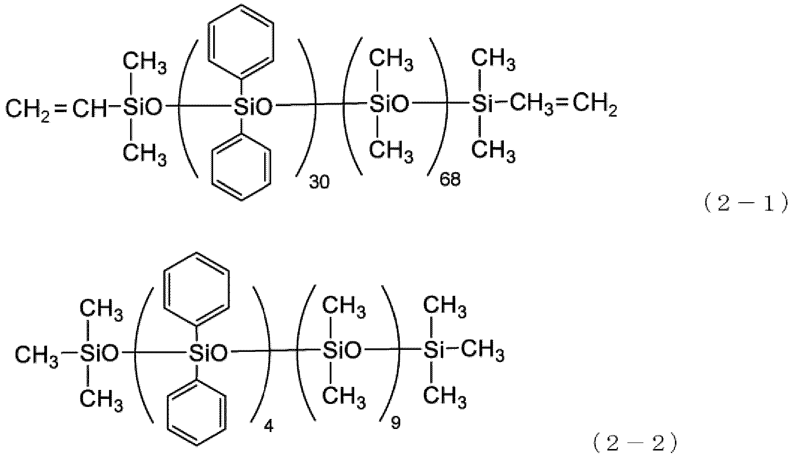

The compounding amount of the component (B) is within a range of 20 to 40 parts by mass, preferably 25 to 35 parts by mass, based on 100 parts by mass of the component (A). When the compounding amount is less than 20 parts by mass, the function as a compatibilizer weakens, and flowability after viscosity reduction, softening, or melting deteriorates. When the compounding amount is more than 40 parts by mass, the composition may not be brought into a non-flowable state at room temperature, and pump-out resistance may deteriorate.

### (C) Thermally Conductive Filler

The thermally conductive filler as the component (C) is required to have a thermal conductivity of 10 W/(m·K) or more. When the thermal conductivity is less than 10 W/(m·K), the thermal conductivity of the thermosoftening thermally conductive composition becomes low. The upper limit of the thermal conductivity varies depending on the material used as the thermally conductive filler, and there is no particular upper limit.

Examples of the thermally conductive filler having a thermal conductivity of 10 W/(m·K) or more include powders and granular materials such as an aluminum powder, a copper powder, a silver powder, a nickel powder, a gold powder, an alumina powder, a zinc oxide powder, a magnesium oxide powder, an aluminum nitride powder, a boron nitride powder, a silicon nitride powder, a diamond powder, and a carbon powder. These may be used alone or in a mixed combination of two or more kinds.

When powders or granular materials are used as the thermally conductive filler, the shape thereof may be any shape, such as an irregular shape or a spherical shape, but the average particle size thereof is 0.3 to 20 µm, preferably 1 to 15 µm. When the average particle size is less than 0.3 µm, the compounding properties of the composition deteriorate, and spreadability deteriorates. When the average particle size is more than 20 µm, the thickness after thermocompression bonding may not be reduced. The average particle size is a value determined as a cumulative volume average diameter D₅₀ (or median diameter) or the like in particle size distribution measurement by laser diffraction. Specifically, the average particle size is a value of a cumulative 50% particle diameter (D₅₀) on a volume basis measured using a particle size distribution measuring apparatus MT3000II manufactured by MicrotracBEL Corp. (the same applies hereinafter).

The compounding amount of the thermally conductive filler is within a range of 800 to 1,300 parts by mass, preferably 900 to 1,200 parts by mass, based on 100 parts by mass of the component (A). When the compounding amount is less than 800 parts by mass, a required thermal conductivity cannot be obtained. When the compounding amount is more than 1,300 parts by mass, the compounding properties of the composition may deteriorate, and spreadability may deteriorate.

### (D) Isoparaffinic Solvent

The thermosoftening thermally conductive composition according to the present invention preferably further contains, as the component (D), an isoparaffinic solvent capable of dissolving or dispersing the components (A) and (B). Although the composition can be dissolved using another volatile solvent, it is difficult to use such a solvent during mounting in terms of safety and health. On the other hand, an isoparaffinic solvent does not pose a problem in terms of safety and health, and workability in printing is also excellent.

The term "isoparaffinic solvent" as used herein refers to a solvent containing 80% by mass or more of an isoparaffin composed of an aliphatic hydrocarbon having 10 or more carbon atoms.

The boiling point of the component (D) is preferably 80°C to 360°C, more preferably 150°C to 350°C. When the boiling point is less than 80°C, volatilization is excessively fast and the viscosity increases during printing, which may result in defects. When the boiling point is more than 360°C, the component (D) is likely to remain in the thermosoftening thermally conductive composition according to the present invention, and thermal properties may deteriorate.

The phrase "capable of dissolving or dispersing" as used herein refers to a state in which, when the components (A) and (B) are added to the isoparaffinic solvent, the components are uniformly mixed or uniformly suspended as fine particles.

When the component (D) is compounded, the compounding amount is preferably within a range of 10 to 300 parts by mass, more preferably 50 to 200 parts by mass, based on 100 parts by mass of the component (A). When the addition amount of the component (D) is less than 10 parts by mass based on 100 parts by mass of the component (A), the viscosity of the thermosoftening thermally conductive composition according to the present invention at room temperature cannot be sufficiently reduced, and therefore printability may also deteriorate. When the addition amount is more than 300 parts by mass, sedimentation of the filler accelerates, and storage stability of the thermosoftening thermally conductive composition may deteriorate.

The component (D) may be used alone, or two or more of them may be used in combination.

### (E) Surface Treatment Agent

The thermosoftening thermally conductive composition according to the present invention may contain a surface treatment agent as the component (E). The component (E) can render the component (C) hydrophobic during preparation of the composition, improve wettability with the components (A) and (B), and uniformly disperse the component (C) in a matrix formed from the components (A) and (B). The component (E) is particularly preferably one or more selected from the following components (E-1) and (E-2).

The component (E-1) is an alkoxysilane compound represented by the following formula (3).
[Chem. 3]

R⁵_{b}R⁶_{c}Si(OR⁷)_{(4 -b-c)} (3)

In the formula (3), each R⁵ independently represents an alkyl group having 6 to 15 carbon atoms; each R⁶ independently represents a group selected from an alkyl group having 1 to 5 carbon atoms, an aryl group having 6 to 12 carbon atoms, and an aralkyl group having 7 to 12 carbon atoms; each R⁷ independently represents an alkyl group having 1 to 6 carbon atoms; b is a number of 1 to 3; and c is a number of 0 to 2, provided that b + c is a number of 1 to 3.

Examples of the alkyl group represented by R⁵ in the formula (3) include a hexyl group, an octyl group, a nonyl group, a decyl group, a dodecyl group, and a tetradecyl group. When the number of carbon atoms of the alkyl group represented by R⁵ falls within the range of 6 to 15, wettability of the component (A) is sufficiently improved, handling properties are favorable, and low-temperature properties of the composition are favorable.

Examples of the alkyl group having 1 to 5 carbon atoms represented by R⁶ in the formula (3) include a methyl group, an ethyl group, a propyl group, an isopropyl group, a butyl group, an isobutyl group, a tert-butyl group, a pentyl group, and a neopentyl group. Examples of the aryl group having 6 to 12 carbon atoms include a phenyl group, a tolyl group, a xylyl group, a naphthyl group, and a biphenylyl group. Examples of the group selected from an aralkyl group having 7 to 12 carbon atoms include a benzyl group, a phenylethyl group, a phenylpropyl group, and a methylbenzyl group. Among these, preferred examples include an alkyl group having 1 to 3 carbon atoms, such as a methyl group, an ethyl group, or a propyl group; and a phenyl group. Examples of R⁶ include a methyl group, an ethyl group, a propyl group, a butyl group, and a hexyl group.

Examples of the alkyl group having 1 to 6 carbon atoms represented by R⁷ in the formula (3) include a methyl group, an ethyl group, a propyl group, an isopropyl group, a butyl group, an isobutyl group, a tert-butyl group, a pentyl group, a neopentyl group, and a hexyl group.

The component (E-2) is a dimethylpolysiloxane in which one of the molecular chain terminals is blocked with a trialkoxysilyl group, represented by the following formula (4).

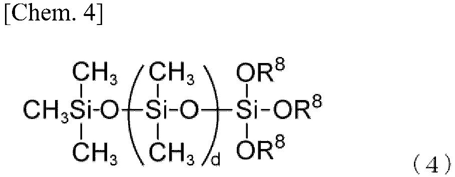

In the formula (4), each R⁸ independently represents an alkyl group having 1 to 6 carbon atoms, and specifically, the same alkyl groups as those exemplified for R⁷ above may be exemplified; and d is a number of 5 to 100, preferably 5 to 70, particularly preferably 10 to 50.

As the surface treatment agent of the component (E), either one of the components (E-1) and (E-2) may be compounded alone, or both of them may be compounded in combination.

When the component (E) is compounded, the compounding amount is preferably 5 to 40 parts by mass, particularly preferably 10 to 30 parts by mass, based on 100 parts by mass of the component (A). When the compounding amount of this component is more than 40 parts by mass, oil separation may be induced.

### Other Additives

Additives, fillers, or the like may be further added to the thermosoftening thermally conductive composition according to the present invention as optional components within a range that does not impair the object of the present invention. Specifically, there may be added silicone oil and fluorine-modified silicone surfactants as release agents; carbon black, titanium dioxide, red iron oxide, and the like as colorants; platinum catalysts, metal oxides such as iron oxide, titanium oxide, and cerium oxide, and metal hydroxides as flame retardancy-imparting agents; and process oil, reactive titanate catalysts, reactive aluminum catalysts, and the like as processability improvers. Furthermore, it is also optional to add fine powder silica such as precipitated silica or fumed silica, thixotropy improvers, and the like as anti-settling agents for the thermally conductive filler.

### Production Method

The thermosoftening thermally conductive composition according to the present invention, which is used for heat dissipation members, can be easily produced by compounding and kneading the above-described components (A), (B), and (C), and optionally other components (the components (D) and/or (E)) as necessary using a rubber kneading machine such as a kneader, a gate mixer, or a planetary mixer. Heating may be performed as necessary.

### Properties After Thermocompression Bonding

The resultant composition of the thermosoftening thermally conductive composition after drying can be compressed to a thickness of 60 µm or less by thermocompression at 50°C for 30 minutes under a pressure of 0.7 kPa.

The thermal resistance of the resultant thermosoftening thermally conductive composition after drying is preferably 10 mm²·K/W or less, more preferably 7 mm²·K/W or less, at a thickness of 20 to 60 µm. The thermal resistance was calculated as an effective thermal resistance from the thermal conductivity determined by a laser flash method and the thickness of the sample according to the following formula. [Math. 1] $Thermal resistance \left({mm}^{2}⋅K/W\right) = thickness \left(μm\right) / thermal conductivity \left(W/m⋅K\right)$

The thermosoftening thermally conductive composition according to the present invention can be formed into a thermally conductive coating film that is in a non-flowable state at room temperature by being applied to a heat-generating electronic component and/or a heat-dissipating component by screen printing or the like, followed by air-drying or heating and, when an isoparaffinic solvent as the component (D) is compounded, volatilization of the component (D).

In the present invention, provided may be a heat dissipation structure which includes a heat-generating electronic component that generates heat and reaches a temperature higher than room temperature when operated; a heat-dissipating component; and a thermally conductive coating film interposed between these components and formed of the thermosoftening thermally conductive composition. The thermosoftening thermally conductive composition is non-flowable at room temperature before operation of the electronic component, but decreases in viscosity, softens, or melts due to the heat generated during operation of the electronic component, causing at least a surface of the coating film to fluidize, and thereby substantially filling the space between the electronic component and the heat-dissipating component without gaps.

### Examples

The present invention will be described in more detail with reference to working examples and comparative examples. The present invention is not limited to the following working examples.

The components (A) to (E) constituting the thermosoftening thermally conductive materials used in the following working examples and comparative examples are as follows. In the following, M refers to a trimethylsiloxy unit (i.e., (CH₃)₃SiO_{1/2}), D refers to a dimethylsiloxy unit (i.e., (CH₃)₂SiO_{2/2}), Dφ refers to a diphenylsiloxy unit (i.e., (C₆H₅)₂SiO_{2/2}), D^{Vi} refers to a methylvinylsiloxy unit (i.e., (CH₃)(CH₂=CH)SiO_{2/2}), and Tφ refers to a phenylsiloxy unit (i.e., (C₆H₅)SiO_{3/2}).

### Component (A): Phenyl-Modified Silicone Resin

(A-1) A silicone resin having a phenyl modification ratio of 55 mol% (Average degree of polymerization: 100) and represented by the formula defined as

   D₂₅Tφ₅₅D^{Vi}₂₀
(A-2) A silicone resin having a phenyl modification ratio of 73 mol% (Average degree of polymerization: 100) (for comparison) and represented by the formula defined as

   M₁₅D₁₂(Dφ)₂₂Tφ₅₁
(A-3) A silicone resin having a phenyl modification ratio of 20 mol% (Average degree of polymerization: 100) (for comparison) and represented by the formula defined as

   D₈₀Tφ₂₀

### Component (B): Linear Aryl-Modified Organopolysiloxane

(B-1) An organopolysiloxane having an aryl modification ratio of 26.7 mol% and represented by formula (5) defined as 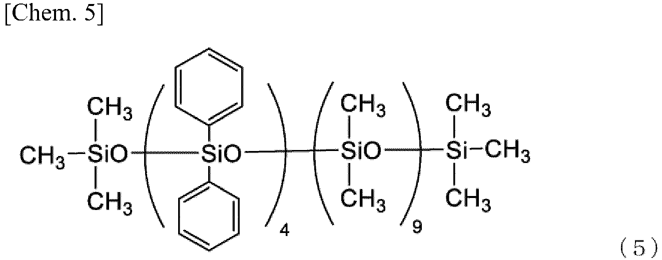
(B-2) An organopolysiloxane having an aryl modification ratio of 5.6 mol% (for comparison) and represented by formula (6) defined as 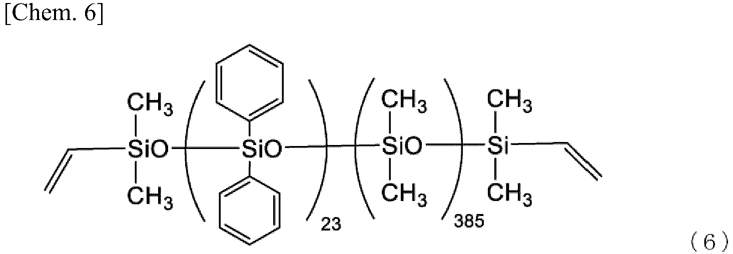
(B-3) An organopolysiloxane having an aryl modification ratio of 100 mol% (for comparison) and represented by formula (7) defined as

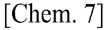

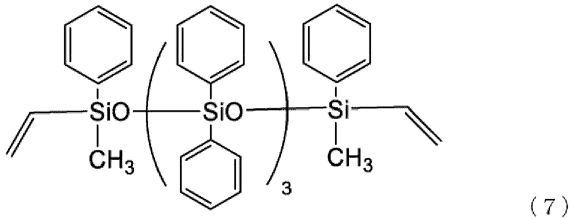

### Component (C): Thermally Conductive Filler

(C-1) Zinc oxide powder: Average particle size 1.0 µm (Thermal conductivity: 54 W/(m·K))
(C-2) Alumina powder: Average particle size 0.3 µm (Thermal conductivity: 27 W/(m·K))
(C-3) Aluminum powder: Average particle size 2 µm (Thermal conductivity: 236 W/(m·K))
(C-4) Aluminum powder: Average particle size 10 µm (Thermal conductivity: 236 W/(m·K))
(C-5) Aluminum powder: Average particle size 30 µm (Thermal conductivity: 236 W/(m·K)) (for comparison)

### Component (D): Isoparaffinic Solvent

(D-1) IP Solvent 1620 (Idemitsu Kosan Co., Ltd., boiling point: 170°C to 200°C)

### Component (E): Surface Treatment Agent

(E-1) Silane represented by the formula defined as

C₁₀H₂₁Si(OCH₃)₃

The components (A), (B), (C), (D), and (E) were charged into a planetary mixer in the compounding amounts shown in Tables 1 and 2 below, and compounded for 60 minutes to produce paste-like thermosoftening thermally conductive compositions of working examples 1 to 6 and comparative examples 1 to 7. The paste-like thermosoftening thermally conductive compositions were dried so as to have a predetermined amount and a predetermined thickness, thereby volatilizing the solvent in the compositions to obtain thermosoftening thermally conductive compositions. Tables 1 and 2 also show the properties of the resultant thermosoftening thermally conductive compositions.

### [Evaluation Methods]

Tests relating to the present invention were performed as follows.

### [Pump-Out Resistance]

A paste-like thermosoftening thermally conductive composition in an amount of 0.3 g was applied to an aluminum plate, and the solvent in the composition was volatilized in an oven at 120°C for 30 minutes. Then, before the composition is cooled, a 0.5 mm spacer was provided and a slide glass was placed thereon, to sandwich the thermosoftening thermally conductive composition therebetween. This test specimen was stood vertically relative to the ground, placed in a thermal shock tester manufactured by ESPEC Corp. (model number: TSE-11-A) set so as to alternately repeat cycles between 0°C and 125°C (30 minutes each), and subjected to a 500-cycle test. After 500 cycles, the extent to which the thermosoftening thermally conductive composition had been displaced from the original position was measured.

### [Thickness and Thermal Resistance After Thermocompression Bonding]

A paste-like thermosoftening thermally conductive composition was applied to a lightly peelable PET separator film, and the solvent in the composition was volatilized in an oven at 120°C for 10 minutes, to prepare a thermosoftening thermally conductive composition having a thickness of 200 µm (hereinafter, "sheet"). The sheet was attached to an aluminum plate, and after the separator film was removed, an aluminum plate was attached to a surface of the sheet from which the film had been removed. Then, the sheet was heated at 50°C for 30 minutes together with the two aluminum plates while a pressure of 0.7 kPa was applied using clips or the like. The thickness was measured together with the two aluminum plates, and a substantial thickness of the sheet was measured by subtracting the thickness of the aluminum plates having a known thickness. For the thickness measurement, a micrometer (manufactured by Mitutoyo Corporation, model: M802-25VA) was used. The thermal resistance of the sheet was measured using a laser flash measuring apparatus (manufactured by NETZSCH, LFA 467 HyperFlash).

### <Working Examples 1 to 6>

Sheet-like thermosoftening thermally conductive compositions were obtained by the above-described method using the compositions (a) to (f).

### <Comparative Example 1>

The composition (g) was applied to an aluminum plate or a separator film and dried to obtain a thermosoftening thermally conductive composition. In the pump-out resistance test, displacement was significant, and pump-out resistance was poor.

### <Comparative Example 2>

The composition (h) was applied to an aluminum plate or a separator film and dried to obtain a thermosoftening thermally conductive composition. In the pump-out resistance test, displacement was significant, and pump-out resistance was poor.

### <Comparative Example 3>

The composition (i) was applied to an aluminum plate or a separator film and dried to obtain a thermosoftening thermally conductive composition. Even after thermocompression bonding, the thickness was not reduced, and thermal resistance was high.

### <Comparative Example 4>

The composition (j) was applied to an aluminum plate or a separator film and dried to obtain a thermosoftening thermally conductive composition. Even after thermocompression bonding, the thickness was not reduced, and thermal resistance was high.

### <Comparative Example 5>

The composition (k) underwent oil separation during compounding and did not become grease-like, and therefore the physical properties could not be evaluated.

### <Comparative Example 6>

The composition (1) underwent oil separation during compounding and did not become grease-like, and therefore the physical properties could not be evaluated.

### <Comparative Example 7>

The composition (m) underwent oil separation during compounding and did not become grease-like, and therefore the physical properties could not be evaluated.

**[Table 1]**

| | | | Working Example 1 | Working Example 2 | Working Example 3 | Working Example 4 | Working Example 5 | Working Example 6 |
|---|---|---|---|---|---|---|---|---|
| | | | (a) | (b) | (c) | (d) | (e) | (f) |
| Compounding amount (g) | (A) | (A-1) | 100 | 100 | 100 | 100 | 100 | 100 |
| | | (A-2) | | | | | | |
| | | (A-3) | | | | | | |
| | (B) | (B-1) | 30 | 30 | 40 | 30 | 20 | 25 |
| | | (B-2) | | | | | | |
| | | (B-3) | | | | | | |
| | (C) | (C-1) | 180 | 90 | 280 | | 90 | 100 |
| | | (C-2) | | | | 195 | | |
| | | (C-3) | 300 | 360 | 300 | 300 | 240 | 240 |
| | | (C-4) | 680 | 700 | 700 | 680 | 470 | 470 |
| | | (C-5) | | | | | | |
| | | Total Amount of Component (C) | 1160 | 1150 | 1280 | 1175 | 800 | 810 |
| | (D) | (D-1) | 36 | 36 | 40 | 36 | 0 | 0 |
| | (E) | (E-1) | 9 | 9 | 5 | 9 | 5 | 0 |
| Thickness After Thermocompression Bonding (µm) | | | 37 | 26 | 50 | 46 | 25 | 27 |
| Thermal Resistance After Thermocompression Bonding (mm²·K/W) | | | 8 | 7 | 9 | 9 | 10 | 10 |
| Pump-Out Resistance (mm) | | | 1 | 1 | 2 | 1 | 1 | 1 |

**[Table 2]**

| | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| | | | (g) | (h) | (i) | (j) | (k) | (1) | (m) |
| Compounding amount (g) | (A) | (A-1) | 100 | | 100 | 100 | | 100 | |
| | | (A-2) | | | | | 100 | | |
| | | (A-3) | | 100 | | | | | |
| | (B) | (B-1) | 50 | 30 | 40 | 34 | 30 | | |
| | | (B-2) | | | | | | 30 | |
| | | (B-3) | | | | | | | 30 |
| | (C) | (C-1) | 180 | 180 | 180 | 200 | 180 | 180 | 180 |
| | | (C-2) | | | | | | | |
| | | (C-3) | 300 | 300 | 480 | 500 | 300 | 300 | 300 |
| | | (C-4) | 680 | | | 700 | 680 | 680 | 680 |
| | | (C-5) | | 680 | 500 | | | | |
| | | Total Amount of Component (C) | 1160 | 1160 | 1160 | 1400 | 1160 | 1160 | 1160 |
| | (D) | (D-1) | 36 | 36 | 36 | 36 | 36 | 36 | 36 |
| | (E) | (E-1) | 9 | 9 | 9 | 15 | 9 | 9 | 9 |
| Thickness After Thermocompression Bonding (µm) | | | 25 | 35 | 100 | 150 | - | - | - |
| Thermal Resistance After Thermocompression Bonding (mm²·K/W) | | | 9 | 8 | 18 | 25 | - | - | - |
| Pump-Out Resistance (mm) | | | 12 | 10 | 1 | 1 | - | - | - |
| Remarks | | | | | | | Separation | Separation | Separation |

## Claims

1. A thermosoftening thermally conductive composition comprising the components (A), (B), and (C) of:
(A) a phenyl-modified silicone resin in an amount of 100 parts by mass, said resin having
an R¹SiO_{3/2} unit, wherein R¹ represents a group selected from an alkyl group having 1 to 10 carbon atoms or a phenyl group, and
an R²₂SiO_{2/2} unit, wherein R² represents a group selected from an alkyl group having 1 to 10 carbon atoms, an alkenyl group having 2 to 10 carbon atoms, and a phenyl group,
wherein the phenyl-modified silicone resin has a phenyl modification ratio of 30 to 60 mol%;
(B) a linear aryl-modified organopolysiloxane in an amount of 20 to 40 parts by mass, wherein the linear aryl-modified organopolysiloxane has one or more aryl groups, having 6 to 10 carbon atoms, per molecule and has an aryl modification ratio of 20 to 60 mol%; and
(C) a thermally conductive filler in an amount of 800 to 1,300 parts by mass, said filler having a thermal conductivity of 10 W/(m·K) or more and an average particle size of 0.3 to 20 µm.

2. The thermosoftening thermally conductive composition according to claim 1, further comprising, as a component (D), 10 to 300 parts by mass of an isoparaffinic solvent having a boiling point of 80°C to 360°C per 100 parts by mass of the component (A).

3. The thermosoftening thermally conductive composition according to claim 1, further comprising, as a component (E), 5 to 40 parts by mass of a surface treatment agent per 100 parts by mass of the component (A).

4. A cured product of the thermosoftening thermally conductive composition according to any one of claims 1 to 3.
